## Europäisches Patentamt

## European Patent Office

## Office européen des brevets

(19)

(11) Veröffentlichungsnummer: **0 066 035**

**A2**

(12)

# EUROPÄISCHE PATENTANMELDUNG

(21) Anmeldenummer: **81890185.2**

(22) Anmeldetag: **30.10.81**

(51) Int. Cl.³: **F 03 D 7/02**

(30) Priorität: **22.05.81 AT 2304/81**

(43) Veröffentlichungstag der Anmeldung:
**08.12.82 Patentblatt 82/49**

(84) Benannte Vertragsstaaten:
**AT CH DE LI NL**

(71) Anmelder: **SIEMENS AKTIENGESELLSCHAFT ÖSTERREICH**
**Apostelgasse 12**
**A-1030 Wien(AT)**

(72) Erfinder: **Biebl, Hans, Dipl.Ing.**
**Postberg 13**
**A-3011 Untertullnerbach(AT)**

(72) Erfinder: **Pötsch, Karl**
**Am Modenapark 8-9/8/10**
**A-1030 Wien(AT)**

(74) Vertreter: **Kohout, Ernst Dipl.Ing.**
**Apostelgasse 12**
**A-1030 Wien(AT)**

(54) **Hilfssteuereinrichtung für Lee-Läufer-Windrad.**

(57) Eine Hilfssteuereinrichtung für ein Lee-Läufer-Windrad, dessen Impeller 3 in bekannter Weise mittels seiner Nabe 2 auf dem herausgeführten Stummel der Achse eines Energiewandlers 1, vorzugsweise eines elektrischen Generators angeordnet ist, wobei dieses Aggregat mittels eines am Gehäuse des Energiewandlers 1 angeordneten Spurlagers 4 an der Spitze eines vertikalen Standrohres 5 horizontal schwenkbar angeordnet ist, bewirkt, daß sich das Aggregat auch dann in die Windrichtung einstellt, wenn sich diese plötzlich um annähernd 90° ändert. Sie besteht aus einem rohrförmigen Steuerteil 8, vorzugsweise in Form eines Kreiszylindermantels, der an der dem Energiewandler 1 abgewandten Seite der Impellernabe 2 auf dem freien Ende einer Achsverlängerung 7 koaxial angeordnet ist und der zur Erhöhung des Luftwiderstandes durch Wirbelbildung eine Anzahl von gleichmäßig verteilt angeordneten Löchern 10 aufweisen kann.

Fig.1

EP 0 066 035 A2

Croydon Printing Company Ltd.

- 1 -

## Hilfssteuereinrichtung für Lee-Läufer-Windrad

Gegenstand der Erfindung ist eine Hilfssteuereinrichtung für ein Lee-Läufer-Windrad, dessen Impeller mittels seiner Nabe auf dem herausgeführten Stummel der Achse eines Energiewandlers, vorzugsweise eines elektrischen Generators angeordnet ist, wobei dieses Aggregat mittels eines am Gehäuse des Energiewandlers angeordneten Spurlagers an der Spitze eines vertikalen Standrohres horizontal schwenkbar angeordnet ist.

Solche Aggregate sind bekannt und werden verbreitet im mittleren Leistungsbereich verwendet. Sie stellen sich aufgrund ihres Aufbaues und der daraus resultierenden Kräfteverhältnisse so in den Wind, daß die Impellerebene senkrecht zur augenblicklichen Windrichtung steht. Dabei können sie raschen horizontalen Windrichtungsänderungen von max. $60^\circ$ einwandfrei folgen. Schwierigkeiten können sich jedoch ergeben, wenn nach einer Flaute der Wind aus einer um etwa $90^\circ$ verschobenen Richtung wieder einsetzt. Wegen der geringen Angriffsfläche, die in diesem Falle der Impeller dem Winde bietet, ergibt sich nur eine geringe Stellkraft und das Aggregat kann sich nur schwer in die erforderliche Richtung schwenken. Dies gilt auch insbesondere beim Auftreten von Vereisungen. Dieser Störungsfall kann durch die Anordnung einer erfindungsgemäßen Hilfssteuereinrichtung ausgeschlossen werden, die dadurch gekennzeichnet ist, daß an der dem Energiewandler abgewandten Seite der Impellernabe eine Achsverlängerung und an deren freiem Ende ein rohrförmiger

- 2 -

Steuerteil, vorzugsweise in Form eines Kreiszylindermantels koaxial angeordnet sind.

Der Vorteil der erfindungsgemäßen Einrichtung liegt darin, daß durch sie der beschriebene Störungsfall sicher vermieden wird und zusätzlich eine verbesserte Nachstellfähigkeit des Aggregates bei Windrichtungsänderungen erzielt wird. Dabei ist die Hilfssteuereinrichtung, da sie mit dem Impeller mitrotiert, sehr einfach anzuordnen. Sie ist auch bei gewichtssparender Ausführung stabil und schwingungssteif und ist einfach herzustellen.

In einer vorteilhaften Ausführungsform weist der Steuerteil eine Anzahl von gleichmäßig verteilt angeordneten Löchern auf.
Damit kann durch eine überaus einfache Maßnahme wegen der damit verbundenen Wirbelbildung bei jeder schräg zur Achse verlaufenden Anströmung eine Verbesserung der Wirkung erzielt werden.

Anhand einer Zeichnungsfigur soll nun die sehr einfach aufgebaute erfindungsgemäße Einrichtung näher beschrieben werden.

Das Aggregat einer Lee-Läufer-Windkraftanlage besteht in bekannter Weise aus einem Energiewandler, vorzugsweise einem elektrischen Generator 1 und einem auf dessen herausgeführten Wellenstummel mittels seiner Nabe 2 angeordneten Impeller 3, der hier der Einfachheit halber 2-flügelig dargestellt ist. Dieses Aggregat ist mittels eines Spurlagers 4, das am Gehäuse des Generators 1 angeordnet ist, am oberen Ende eines vorzugsweise vertikal aufgerichteten Standrohres 5 horizontal frei schwenkbar angeordnet. Zur Verbesserung der aerodynamischen Verhältnisse ist an einer Stirnfläche des Generators 1 ein windschlüpfriger Ansatzteil 6 angeordnet.

An der dem Generator 1 abgewandten Seite der Impellernabe 2 ist koaxial zur Achse des Generators 1 eine Achsverlängerung 7 angeordnet. An deren, der Impellernabe 2 fernem Ende ist koaxial der rohrförmige Steuerteil 8 befestigt. Vorteilhaft kann dies durch Anordnung von speichenförmigen Elementen 9 geschehen, die radial zwischen dem Ende der Achsverlängerung 7 und der windseitigen Stirnkante des vorzugsweise als Zylindermantel ausgeführten Steuerteiles 8 angeordnet werden. Damit wird die freie Durchströmbarkeit des Steuerteiles 8 in axialer Richtung wenig beeinflußt und zugleich an wirksamer Baulänge gewonnen. Der den Steuerteil 8 bildende Zylindermantel kann vorteilhaft mit einer Anzahl von gleichmäßig verteilt angeordneten Löchern 1o versehen werden, sodaß bei jeder nicht achsparallelen Anströmung durch die starke Wirbelbildung ein höherer Wert des Luftwiderstandes und damit der Nachstellkraft erzielt werden kann. Bei achsparalleler Durchströmung wird am rotierenden Steuerteil 8 ein vernachlässigbar kleiner Winddruck auftreten. Bei dieser Durchströmung durch Wirbelbildung eventuell auftretende, nicht achsparallele Kräfte heben sich aus Symmetriegründen auf. Die Befestigung der Achsverlängerung 7 an der Impellernabe 2 kann auf einfache Weise mittels eines Flansches 11 und Schrauben 12 erfolgen.

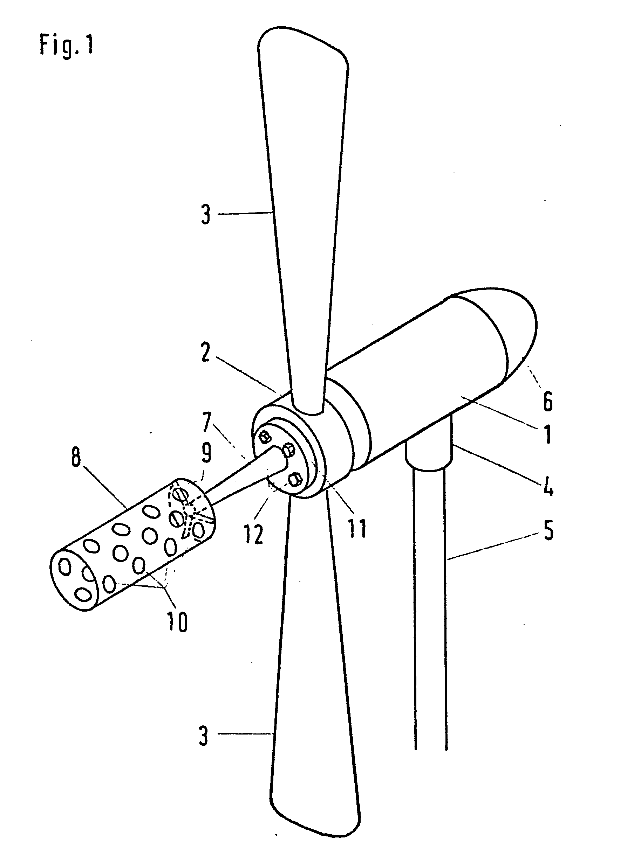

Patentansprüche:

1. Hilfssteuereinrichtung für ein Lee-Läufer-Windrad, dessen Impeller mittels seiner Nabe auf dem herausgeführten Stummel der Achse eines Energiewandlers, vorzugsweise eines elektrischen Generators, angeordnet ist, wobei dieses Aggregat mittels eines am Gehäuse des Energiewandlers angeordneten Spurlagers an der Spitze eines vertikalen Standrohres horizontal schwenkbar angeordnet ist,
dadurch gekennzeichnet,
daß an der dem Energiewandler (1) abgewandten Seite der Impellernabe (2) eine Achsverlängerung (7) und an deren freiem Ende ein rohrförmiger Steuerteil (8) vorzugsweise in Form eines Kreiszylindermantels koaxial angeordnet sind.

2. Einrichtung nach Anspruch 1,
dadurch gekennzeichnet,
daß der Steuerteil (8) eine Anzahl von gleichmäßig verteilt angeordneten Löchern (1o) aufweist.

1/1

Fig.1

3

2

7

9

8

12

11

10

6

1

4

5